(19) Europäisches Patentamt
European Patent Office
Office européen des brevets

(11) **EP 4 064 609 A1**

(12) **EUROPEAN PATENT APPLICATION**

(43) Date of publication:
**28.09.2022 Bulletin 2022/39**

(21) Application number: **21165152.6**

(22) Date of filing: **26.03.2021**

(51) International Patent Classification (IPC):
***H04L 9/32*** *(2006.01)*     ***H04L 29/06*** *(2006.01)*

(52) Cooperative Patent Classification (CPC):
**H04L 9/3239; H04L 9/50; H04L 63/08;**
H04L 2209/56

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Peaq Technology GmbH**
**10115 Berlin (DE)**

(72) Inventors:
• **THAKE, Maximilian**
**Swieqi SWY3057 (MT)**

• **FOMENKO, Pavlo**
**03037 Kyiv (UA)**
• **PÖNITZSCH, Julia**
**10115 Berlin (DE)**
• **WENDLER, Till**
**10115 Berlin (DE)**
• **DORLÖCHTER, Leonard**
**10115 Berlin (DE)**

(74) Representative: **Bardehle Pagenberg**
**Partnerschaft mbB**
**Patentanwälte Rechtsanwälte**
**Prinzregentenplatz 7**
**81675 München (DE)**

(54) **DIRECTED ACYCLIC GRAPH OF BLOCKS DATA STRUCTURE AND NODE COMMUNICATION**

(57)     The present invention is a programming implemented database (DB) structuring and Node (Nd) communication mechanism comprising a block generating step and storing it in a vertex of a Directed Acyclic Graphs (DAG). The invention can be implemented over a Distributed Ledger Technology (DLT) or a centralized computing system. The DAGchain is structured in such a way so that it reaches the minimum complexity for the search and verification of transactions (Tx) being stored in a block by a consensus algorithm or avoiding an Inner Join. A key element in achieving this is the use of a DAG in the DB structuring - using system tables of dependencies where blocks are key to Table where this block was created. In the system DB there is a record for each Tx in which vertex the Tx was created in. This record serves as the key to search the previous change in the state and solves the main problem of finding the shortest path in the DAG. The work of the Nd for synchronizing the new Block in each Nd DB is based on the Nd weight and Computation Power (Cp), so that the first Nd which receives the new Block will be the Nd with the highest weight and Cp. This solves the problem of network synchronizations and decreases the next block generation start-delay in a DLT.

Fig. 1

EP 4 064 609 A1

**Description**

**1. Technical field**

The present invention relates to the field of database systems and/or Distributed Ledger Technology (DLT), and in particular uses Directed Acyclic Graph (DAG) techniques for efficiently operating a database infrastructure with high performance. The resulting technology, also referred to as DAGchain, relates to several fields including but not limited to sorting algorithms and data structures. Specifically, it can be used for the verification of data through the validation of owners and editing histories. In a broader sense, although it can be used in central systems, it is mainly designed for DLT-like systems, whereby the DAGchain in combination with a node consensus algorithm can enable a new type of Distributed Ledger Technology.

**2. Background of the invention**

It is desirable to have a neutral, decentralized and high-performance Distributed Ledger Technology (DLT) infrastructure for several reasons and applications. The need for a DLT of this nature surfaced after attempting to develop solutions for multiple clients but being faced with the same problems in existing DLTs on every occasion. These problems include, but are not limited to, achieving scalability, consistency across nodes, security and a high degree of decentralization, simultaneously.

An example of an application of DLT is in the field of Internet of Things (IoT) roaming and the regulation of access rights to data. In the field of IoT roaming, a large amount of IoT sensors and IoT networks must be billed, documented and verified in very little time, while there must also be the possibility to roam between different providers. A neutral, high-performance environment would allow a large number of sensors to document, validate and account for transactions and communications within individual IoT networks and between different IoT networks.

Another example of an application of DLT is in creating a neutral environment for access rights as a way of preventing serious security threats. Existing systems oftentimes have "back doors", i.e. unauthorized access routes which bypass standard approval processes. Actions and changes can be made without the owner of the system knowing about them, which poses a critical security risk.

Currently, access control systems are typically provided by different parties, all of which use conventional databases, preventing organizations from managing the access of multiple systems from one place or system, limiting access control systems to having to be managed on a system-by-system basis. Additionally, in existing systems everyone with access to the database can potentially compromise or corrupt it. Data, actions, access grant records and entire system histories can be altered and even deleted on existing systems.

It is therefore an object of the present invention to provide a high-performance, decentralized computing platform that enables several parties to exchange, collaborate and/or interact via a neutral environment, especially in connection with large amounts of valuable data.

**3. Summary of the invention**

The invention is defined in the independent claims. One aspect of the invention provides a computer-implemented method of operating a Distributed Ledger Technology (DLT) computing system. It shall be understood that the concepts and aspects of the invention disclosed herein are not limited to a DLT computing system, but may equally be employed for operating other types of computing systems, such as, without limitation, a database system and/or a data storage system, both of which may be arranged in a centralized or distributed manner.

The method may comprise a block generating step of generating a data block, the data block comprising data relating to a plurality of DLT transactions (database records in case no DLT is used). The method may further comprise a block storing step of storing the data block in a vertex of a Directed Acyclic Graph (DAG) data structure of a first computing node of the plurality of computing nodes. The method may further comprise a block synchronizing step of synchronizing the DAG data structure of the first computing node with DAG data structures of at least some of the other computing nodes of the plurality of computing nodes.

Accordingly, this aspect provides an innovative combination of Blocks of data and DAG technology, in particular for structuring the database which stores data relating to the transactions (records). Grouping multiple transactions into blocks is beneficial in order to search for the relation of transactions to actors in a tree.

In a further aspect, the method may comprise the step of creating a record in a system database, the record indicating which vertex of the DAG data structure stores data relating to a particular transaction. This is particularly beneficial for finding the shortest path on the DAG tree in order to verify a transaction or record.

Particularly the block generating step and the block storing step may be performed in the DLT by the first computing node of the plurality of computing nodes and stored in the DAG data structure with vertex in system database corresponding to this block.

The block synchronizing step may comprise transmitting the data block from the first computing node to a plurality of other computing nodes of the plurality of computing nodes using the vertex record in the system database and by finding the shortest path (max weight way) by Node weight in the order vertexes are submitted.

The plurality of computing nodes may be arranged in a peer-to-peer distributed computing architecture. As already mentioned above, this way the provided system does not need any central control entity and is fully distributed.

In addition or alternatively, the plurality of computing nodes may be arranged in a DAG structure. Accordingly, also the nodes themselves, and their communication structure, respectively, may be arranged in a DAG tree. Thus, the synchronization can be done by the shortest path of the Node with the highest weight.

The present invention also provides a computer program comprising instructions which, when the program is executed, cause a computing node or a Distributed Ledger Technology (DLT) computing system to perform and of the methods described above. Lastly, also corresponding computing nodes and a DLT computing system are provided.

## 4. Brief description of the drawings

In the following detailed description, presently preferred embodiments of the invention are further described with reference to the following figures:

Fig. 1:    An exemplary DAG formed by P-Nodes according to embodiments of the invention.

Fig. 2:    A verification flow for a transaction in a P-Node according to embodiments of the invention.

Fig. 3:    A schematic overview of how nodes are structured according to embodiments of the invention.

## 5. Detailed description of presently preferred embodiments

Aspects of the present invention generally relate to database (DB) structuring, as well as a Node (Nd) communication mechanism in the form of a DAG. The term DLT as used herein commonly refers to a distributed ledger which can be used by entities to share and/or synchronize data in consensus without a central administrator, in a one-to-many, many-to-one or many-to-many relation.

Generally speaking network and a consensus algorithm are required to ensure correct replication and consistency across nodes. The best-known form of DLT is blockchain technology. Another system that can be classified in particular use case as a DLT is the Directed Acyclic Graph (DAG).

Certain embodiments of the invention employ an innovative combination of blockchain technology and the DAG as a means of achieving greater results than the use of either of the aforementioned technologies individually for the purpose creating a DLT network for industry use. In DLT, transactions are stored in the ledger and are triggered by the use of the system. To make a transaction valid, there must be a consensus between defined parties within the network. The DAGchain of embodiments of the invention is structured in such a way as to reach the minimum complexity for the search and verification of transactions (Tx).

A key element of embodiments of the invention is the use of DAG in the DB structuring, using system tables of dependencies where blocks are key to Nd where this block was created.

In the system DB for each transaction there is a record in which vertex of the DAG the transaction was created in. This record serves as the key to search the previous change in the wallet and solves the main problem of finding the shortest path in DAG. The work of the Nd for synchronizing new Block in each Nd DB is based on Nd weight and Computation Power (Cp), so that the first Nd which receives the new block will be the Nd with highest weight and Cp. This will solve the problem of network synchronizations and decrease the next Round (Rd) start-delay in a DLT.

Executive summary

In its entirety, a preferred embodiment of the invention, which will be referred to as "DAGchain", forms the basis for a neutral, high-performance DLT and Nd communication using well-known practices and algorithms DB. Generally speaking, one design principle underlying embodiments of the invention is a Directed Acyclic Graph (DAG) inside a Blockchain (or other suitable distributed ledger). The provided Blockchain uses DAG technology to improve efficiency and speed. Transactions are grouped into blocks. Blocks are stored in the database of full nodes. The DAG technology is used to speed up the Blockchain database. A node consensus algorithm may also incorporate DAG technology for greater efficiency.

In one possible consensus algorithm whereby also the nodes themselves, and their communication structure, respectively, may be arranged in a DAG tree would complement this Directed Acyclic Graph of Blocks Database (The DAGchain) and thereby in combination forming a new Type of Distributed Ledger Technology could be as following: Blocks are generated in rounds. Each round a new block is generated, and it is synced if consensus is reached. There may be three types of full nodes: Validator, Generator and Storage. They are randomly chosen based on weight by the Monte Carlo algorithm. Each round a Leading Node is chosen, which generates the new block. Leading node sends the new block to validating nodes. Validating nodes vote on blocks. 2/3 of validating nodes must agree on the block for consensus. The block is synced with all nodes when consensus is reached by the validating nodes.

In one embodiment, full nodes sync blocks through communicating in a DAG structure. Each full node has its own database which is synced with the validating node once per round. Full nodes store the current state of wallets (a snapshot) in their cache. Full nodes interact with each other using messages. Embodiments of the invention are resistant to failure for < 2/3 of full nodes.

DAG PoC network

Before presently preferred embodiments of the invention will be described in greater detail, what follows is a description of an initial Proof-of-Concept (PoC) developed by the inventors that does not use blocks. The PoC comprises a DAG network designed for sending, receiving and/or validating transactions. However, the PoC was not optimal with respect to scaling and attack resistance without reducing the scalability or without losing the suitability for industry use. In the following, the process, the results and the problems of the PoC will be described in more detail both from a technical and a mathematical point of view.

The DAG PoC network may be defined as $Pq \equiv (Nd, E, f)$, where $Nd$ are the Nodes in the DAG and for transaction each Object is a Vertex $V$ with $Tx$ of maximum weight, $E \subseteq Nd \times Nd$ is the set of edges, and $f : Nd \times Nd \to \mathbb{R}$ is the weight function.

The following conditions hold true for the weight function: $f(a, b) \geq 0$ (there are no negative weights), $f(a, a) = 0$ (zero distance to itself), and $f(a, b) = \infty \leftrightarrow (a, b) \notin E$. All distances are in Natural numbers.

For the implementation of an asynchronous and decentralized network for Nds connection and synchronization, let us define that $D$ is a distance matrix and have a distance function

$$d \in N, D \to d(v_1, v_2) = \min_{SP} f(v_1, v_2)$$

where $SP(v_1 \to v_2)$ is an array of all paths for the $Tx$ to be validated.

Each Nd forms its DAG Path for Consensus, which makes all Nds working against each other. Let all $Pq$ be the set of graphs $G = (V, E)$ in which at time $t \geq 0$ the state of the DAG ledger $Pq(t) \equiv (V(t), E(t))$ and $V(t), E(t)$ represents the set of vertexes and directed edges.

As the network is persistent and consistent from $t = 0$ where $V(0) = \{G\}$, $E(0) = 0$ and over time the following statement must be TRUE:

$$(0 < t_1 < t_2) \to \left(V(t_1) \subseteq V(t_2) \text{ \&\& } E(t_1) \subseteq E(t_2)\right)$$

Transactions continuously arrive to the network and are added to the DAG as vertexes. The Nd adds a vertex to the graph over the walk. The consensus algorithm votes on new vertex as $V(t_{i+1}) = V(t_i) \cup \{v\}$ && $E(t_{i+1}) = E(t_i) \cup \{(v, v')\}$.

However, the practical implementation with decentralized voting suffered efficiency problems when defining the sub-graphs on each node and in reaching consensus. Instead of having a predicted run-time complexity of $O(E + V \log V)$ on one running Node, the complexity was $O(E + V \log V + SP^{Nd})$. It could be reduced by using the Simplex algorithm, so that the complexity decreased to $O(E + V \log V + 2^{Nd})$, but this would still be not optimal for the traffic in, e.g., IoT networks.

On the other hand, the conceivable alternative solution of a centralized system would go against the overall goal of providing a neutral infrastructure where the control of the network is distributed among its users. The inventors finally conceived another solution where DAG technology can be used in combination with other technologies and other practices, as will be described now in the following.

DAGchain

In the following, a presently preferred embodiment of the invention referred to as DAGchain will be described.

Structurally, the DAGchain of the described embodiment can be understood as Directed-Acyclic-Graphs (DAGs) within a blockchain. DAG technology is used to improve the efficiency and speed of the blockchain. The transactions are combined into blocks. The blocks are stored in a database. The DAG technology is also used to accelerate the database and to achieve the same state throughout the network.

In the peaq use case, nodes (Nds; also referred to as "P-Nodes") are a part of the algorithm which choses nodes for rounds and allows them to join the network or remove them from it. The nodes must have all information about each P-Node weight $\overline{W}_i$ and computing power value $Cp_i$ using a p2p messaging system. Based on these values, the synchronization DAG tree, which is fully transparent, is found.

Blocks (also referred to as "P-Blocks") are used to decrease the computation power for consensus and verification of transactions. For this, several best-practices such as the approximate max-flow min-cut theorem may be used, as our complexity goal to hit, based on the Ford-Fulkerson method and the Dijkstra's algorithm for finding our single-source shortest path SP which brought us to the following preferred structure. In this preferred structure, a block may comprise all or any subset of the following:

- An ID of the Leading Nd (LN) where the Block is created as the dependency of the Nd to the Block

- A hash of the peaq network state at the beginning of the Round when the Block generation started

- A hash of the DB (same for all Full Nodes) at the beginning of the Round when the Block generation started

- A hash of the Objects DB at the end of the generation time slot

- A hash of the previous block as the foundation for DAG Verification search

- Messages: Proposal from LN and from Validating Nd (VN) pre-vote, vote and/or pre-commit

- The complete list of transactions and/or generated hashes

- A block reward list (LN and Node holder's Public Key (PK), VN and Holders PK, the reward-pool)

A new block $B_{LN}^{m+1}$ is stored in the DAG-DB $DB_{LN}$ of the leading node LN (the node of creation) and is synced over the network Pq as it passes consensus, e.g. using a ADDBFT consensus algorithm. The number of databases $DB_{Pq}$ will always be equal to the number of nodes: $\sum_k DB_k = \sum_k Nd_k$. This makes the size of P-Block B as maximum minimum (variables to compare and size) and allows us to find the shortest path on DAGchain $SP_{k+i}$ (verify transaction $Tx_{k+i}$) with the total complexity $0(Nd + Tx\ log\ B)$ which will fulfill our goal of max-flow in the peaq network embodiment.

It is an objective of the present invention to provide a data structure and synchronization flow system that can be used in DLT and centralized systems, able to handle the current required operations per second, be ready for scale and not suffer from any of the problems or deficiencies mentioned above. In this part the DAGchain will be described in more detail with mathematical logic equations and a reference to the drawings. It must be noted that the DAGchain only works in combination with and in application of the structure, mathematical logic and practices described in this patent. None of the structures, practices or logic can be excluded or changed.

As it is described the DAGchain can be divided in two main parts:

    1. The P-Node synchronization, weight and communication.
    2. The DB structure which depends on the P-Block creation.

Each node (P-Node) is assigned a weight $\overline{W}_i$ calculated by the number of times it participated as VN and/or LN $W_{VN\|LN}$ and GN by amount of $Tx$ transactions added to P-Blocks $W_{Tx}$:

$$\forall\ i, j, m \in N, \exists!\ \overline{W}_i\left(Nd_j(T_m)\right) = \begin{pmatrix} W_{VN\|LN} \\ W_{Tx} \end{pmatrix}$$

As soon as the counter $W_{VN\|LN}$ reaches a maximum value, it is divided by 2 for all Nodes Weight $W_{VN\|LN}/2$. As soon as the nodes transactions counter $W_{Tx}$ reaches a maximum value, the nodes weight $W_{VN\|LN} + 1$ is incremented.

This calculated $\overline{W}_i$ is irreducible and aperiodic with the combination of computing power value $Cp_i$ of P-Nodes. These parameters in one embodiment the input for a consensus algorithm (e.g. ADDBFT) of the P-Nodes participating in the round.

The LN verifies the transaction and adds it to the P-Block. The successfully verified $Tx_{k+1}^i$ is added (executed) to the $B_{LN_k}^{m+1}$ to $DB_k$ in the LN.

$$DB_k = \begin{cases} B_{LN_k}^0 = \begin{bmatrix} Tx_{LN}^0, \ LN \ reward \ transaction \\ ... \\ ... \\ Tx_j^i, \ GN_j \ last \ transaction \ verified \end{bmatrix} \\ ... \\ B_{LN_k}^m \\ B_{LN_k}^{m+1} = \begin{bmatrix} Tx_{LN}^0, \quad LN \ reward \ transaction \\ ... \\ ... \\ Tx_{k+1}^i, \quad GN_{k+1} \ transaction \ verified \\ ... \\ ... \end{bmatrix} \end{cases}$$

The P-Block is the only part of the network which directly participates in both DAG parts: In the part of nodes as the edge, and as the vertex in the DB structure.

The DAG structure of the databases will make the execution process very fast to fit $0(Nd + Tx \log B)$ complexity.

The Flow of P-Block $B_{LN_k}^{m+1}$ starts at the end of the round and as soon as a defined number of nodes are synchronized (executed $Tx$) in the previous Round $B_{LN_j}^j$.

The GN forms its own block and the LN aggregates all transactions from the Blocks generated by GN:

$$\exists! \ B_{LN_k}^{m+1} = \{Tx_{GN}\} \rightarrow Tx\left(B_{LN_k}^{m+1}\right) = \left(Tx_{LN} + \sum_{i=0}^{Nd_{VN}} Tx_i + \sum_{i=0}^{4999-\Sigma VN} Tx_{GN}^i\right) \leftrightarrow$$

$$\leftrightarrow \left(B_{GN_2}^{m+1}, ..., B_{GN_j}^{m+1}, ..., B_{GN_{Ro_h}}^{m+1}\right) \subseteq B_{LN_k}^{m+1}$$

P-Nodes have an application structure and/or DB structure that suits various requirements and achieves scalability levels necessary for growth. For reducing the $Cp$ of the verification and for the full history search, the DBs for storing transactions use DAG for the block representation, so that the DBs are a DAG $DB_{Pq}$ = ($B, Tx, SP$). For the optimization of P-Node synchronization each P-Node may have a state which indicates the current sync progress with the round index.

The second part of the DAG is the state machine messaging in P-Nodes $M \equiv (Nd, B, W)$. This communication is discrete on several levels, such as the following ones:

- Encrypted system messaging using the key pair and endpoint for it;

- Public messaging without encryption with endpoint, protected by firewall (FW);

- Encrypted private messaging using the key pair and endpoint for it.

These two DAGs give the possibility to reduce the complexity and have the speed and the scalability for several use-cases. Those parts are used for faster synchronization, reaching consensus and most importantly for $Tx$ verification.

In view of the above, a complete DAGchain embodiment can be defined as $DAGchain$ = ($Nd, B, W$) ∪ ($B, Tx, SP$).

As explained above, the P-Nodes of embodiments of the invention have multiple DB $\Sigma_k DB_k = \Sigma_k Nd_k$, and there may also be additional DBs for system requirements. In general, as soon as a new Node $Nd_{i+1}$ is added to the network, a new $DB_{i+1}$ is also created for this P-Node and synced over the network.

There may be additional DBs that store key-map and object states for faster search and/or response to the client. The records DB is preferably the only one that will have amendable data and as its $H(DB_{Rec})$ was written in P-Block.

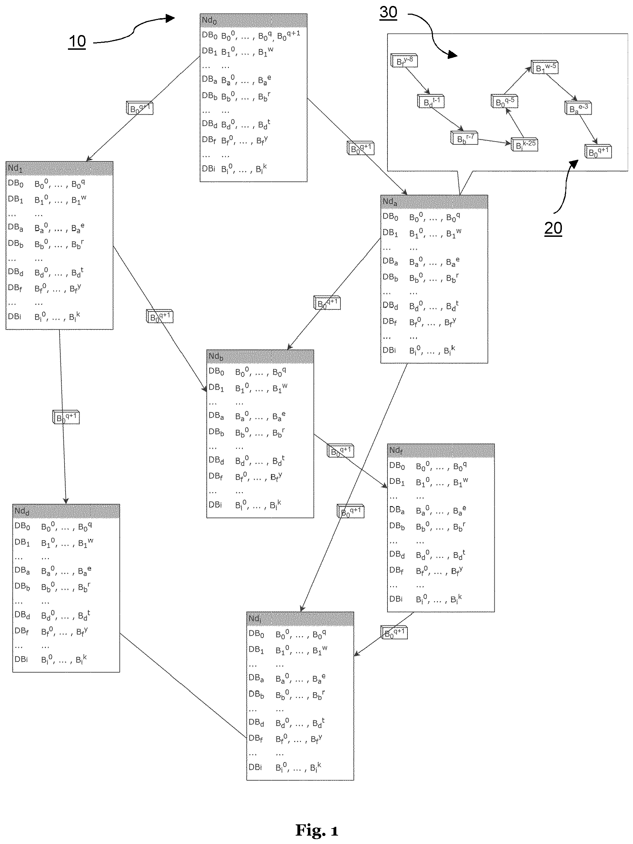

Fig. 1 illustrates an exemplary DAG formed by P-Nodes. It shows the synchronization process between the nodes. As can be seen, the nodes in a DAG structure synchronize, since all nodes have the same history. The superscript $q+1$ shown in the node $Nd_o$ indicates that a new block $B_o{}^{q+1}$ is added to the synchronization process, which then appears in all nodes. This block can be found in the box in the upper right corner of Fig. 1, where the blocks are arranged in a DAG structure and not in chains as usual for a blockchain.

As a result, embodiments of the invention provide a chain of blocks stored in the DB of each node and System DB key-value storages.

Each block is stored in the DB of its node of creation and has a hash of the previous block.

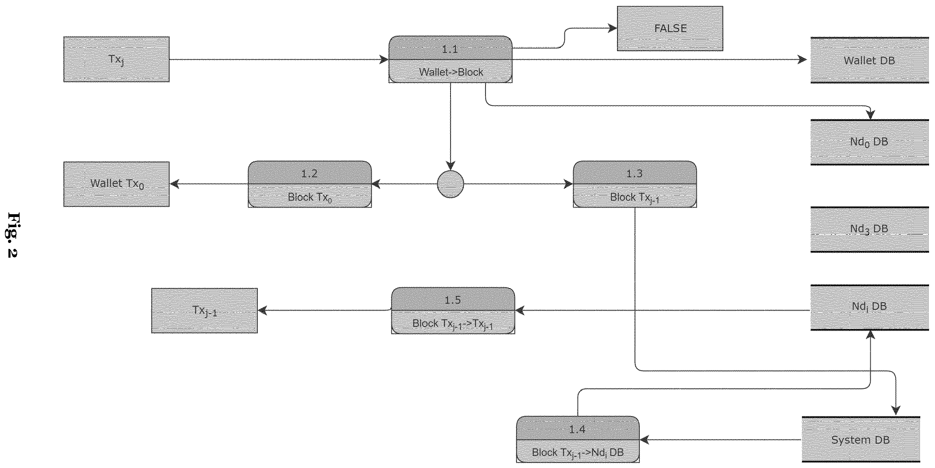

The system DB stores pairs of $$H\left(B_{LN_k}^{m+1}\right) == Nd_k$$ and this way dramatically decreases verification time (finding SP). As illustrated in Fig. 2, when going for the full search history and the verification of the Wallet state from the first object, the DAG speed will make the full history available for the review, similar to e.g. git.

Referring again to Fig. 2, the illustrated flow can be described as follows:
A transaction is being created.

  a) Transaction is known - it would not be added to the block (i.e. marked as false; e.g. the previous transaction from another node changed the sender's wallet balance to a lower amount then is needed).

  b) Transaction is unknown - adds to block.

  c) Transaction send to Leading Node (Nodeo) Block - gets verified:

The cycle will continue until it will find *Wal.o.* When it finds Wallet Txo the state will be added to the system database (the Leading Node does not generate transactions, it only creates the block).

• Each Nodes chosen to be GN && LN can generate Transactions for new Block

• Node verifies Transaction comparing it with hashes of all known Transactions if state of DB is equal to Hash stored in new Block.

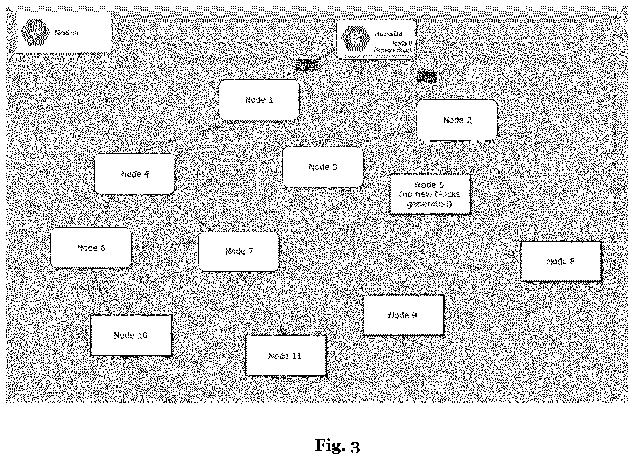

Fig. 3 illustrates schematic overview of how nodes are structured according to embodiments of the invention.

In another aspect, the communication layers are designed as messages between Nd. That are part of sync unknown data: new P-Blocks, current Rd or for state information as Nd‖Rd‖DB‖ peaq status. This part for creating and handling messages is an integral part of Nd functioning. The higher the Node weight is the higher is the chance to get updated earlier.

In classic DAG-like algorithms this part can create huge problems when the amount of nodes increases and reaches exponential complexity $0(Tx^2)$ only in the part of communication layers. Combined with the complexity described further above, it makes it fully limited in scaling amount of nodes and thereby very difficult if not impossible to run any applications with an increasing usage and increasing amount of transactions on the system.

There are several types of messages with two main classes: The System (ADDBFT) and the Synchronization. The system type has limits which must have the following: Height of previous and proposed P-Block, peaq hash, DB hash. The synchronization is mostly used to get information and/or status from the network. Based on P-Node type and stage in Rd, Nd uses the previously given system key for signing message. For each type of message delay is defined based on message type.

A DLT according to embodiments of the invention referred to as DAGchain herein uses blocks in order to organize the DB, increase the speed of validation and increase search speed. The DAGchain also uses blocks as DAG vertex in the collection of transactions conducted in the peaq DLT in a probabilistic structure such as a Bayesian network for the ADDBFT algorithm as well as for the compact representation of sequence data. Each P-Block can contain up to 5,000 transactions and this can be scaled to meet network needs. Thereby, the DAGchain provides a new type of data structure and synchronization flow system within the class of Distributed Ledger Technologies. It overcomes the challenge of handling large amounts of data while maintaining high performance, security and decentralization in neutral environments by using the advantages of conventional blockchains with the advantages of DAG technology in a unique combination with different existing algorithms and practices.

Embodiments of the invention can be used to provide the single-source shortest path which provides users with the ability to use it on big data analytics, on security checks and/or on payment verification in as close to real-time as possible. It provides companies with features such as live monitoring, recording and/or modification of data. It provides consumers real time updates of statuses, payments and/or access to any provider. Embodiments of the invention may relate to several fields including but not limited to sorting algorithms and data structures. Specifically, it can be used for the verification of data through the validation of owners and editing histories. In a broader sense, although it can be used in central systems, it is mainly designed for DLT-like systems. The DAGchain can be used in several types of roaming solutions such as in the field of IoT networks, security systems, access control systems, supply chains and several other similar use cases across, but not limited to, the automotive, telecommunications, machine and manufacturing industries.

The systems and methods described herein may be embodied by a computer program or a plurality of computer programs, which may exist in a variety of forms both active and inactive in a single computer system or across multiple computer systems. For example, they may exist as software program(s) comprised of program instructions in source code, object code, executable code or other formats for performing some of the steps. Any of the above may be embodied on a computer readable medium, which include storage devices and signals, in compressed or uncompressed form.

The terms "computer" and "node" refer to any electronic device comprising a processor, such as a general-purpose central processing unit (CPU), a specific purpose processor or a microcontroller. A computer and/or node is capable of receiving data (an input), of performing a sequence of predetermined operations thereupon, and of producing thereby a result in the form of information or signals (an output). Depending on context, the term "computer" will mean either a processor in particular or can refer more generally to a processor in association with an assemblage of interrelated elements contained within a single case or housing.

As used herein, a "computer-readable medium" or "storage medium" can be any means that can contain, store, communicate, propagate, or transport the program for use by or in connection with the instruction execution system, apparatus, or device. The computer readable medium can be, for example but not limited to, an electronic, magnetic, optical, electromagnetic or semiconductor system, apparatus, device, or propagation medium. More specific examples (a non-exhaustive list) of the computer-readable medium can include the following: an electrical connection having one or more wires, a portable computer diskette, a random access memory (RAM), a read-only memory (ROM), an erasable programmable read-only memory (EPROM or Flash memory), an optical fiber, and a portable compact disc read-only memory (CDROM).

## Claims

1. A computer-implemented method of operating a Distributed Ledger Technology (DLT) computing system comprising a plurality of computing nodes (10), the method comprising:

   a block generating step of generating a data block (20), the data block (20) comprising data relating to a plurality of DLT transactions;
   a block storing step of storing the data block (20) in a vertex of a Directed Acyclic Graph (DAG) data structure (30) of a first computing node (10) of the plurality of computing nodes; and
   a block synchronizing step of synchronizing the DAG data structure (30) of the first computing node (10) with DAG data structures (30) of at least some of the other computing nodes (10) of the plurality of computing nodes.

2. The method of claim 1, wherein the data block (20) further comprises an identifier of the computing node (10) by which the data block (20) was generated.

3. The method of any of the preceding claims, wherein the data block (20) further comprises a cryptographic hash of a current status of the DLT computing system.

4. The method of any of the preceding claims, wherein the data block (20) further comprises a cryptographic hash of the DAG data structure (30).

5. The method of any of the preceding claims, wherein the data block (20) further comprises a cryptographic hash of the previous data block (20) in the DAG data structure (30).

6. The method of any of the preceding claims, further comprising:
   creating a record in a system database, the record indicating which vertex of the DAG data structure (30) stores data relating to a particular DLT transaction.

7. The method of any of the preceding claims, wherein the block generating step and the block storing step are performed by the first computing node (10) of the plurality of computing nodes.

8. The method of any of the preceding claims, wherein the DLT system comprises data synchronization and messaging logic which allows access to the correct data to avoid collisions in the system.

9. The method of any of the preceding claims, wherein the block synchronizing step comprises transmitting the data block (20) from the first computing node (10) to a plurality of other computing nodes (10) of the plurality of computing nodes.

10. The method of any of the preceding claims, wherein the plurality of computing nodes (10) are arranged in a peer-to-peer distributed computing architecture.

11. The method of any of the preceding claims, wherein the plurality of computing nodes (10) are arranged in a DAG structure, in particular in a DAG tree distributed computing architecture.

12. The method of any of the preceding claims, wherein the plurality of computing nodes (10) comprises a plurality of consensus nodes, wherein the consensus nodes are configured to perform a consensus algorithm in the DAG data structure (30), preferably using weights assigned to the computing nodes (10).

13. A computer program comprising instructions which, when the program is executed, cause a computing node or a Distributed Ledger Technology (DLT) computing system to carry out the method of any one of claims 1-12.

14. A computing node or a Distributed Ledger Technology (DLT) computing system comprising means for carrying out the method of any one of claims 1-12.

10

30

20

$Nd_0$
$DB_0\ B_0^0, \ldots, B_0^q, B_0^{q+1}$
$DB_1\ B_1^0, \ldots, B_1^w$
$\ldots\quad\ldots$
$DB_a\ B_a^0, \ldots, B_a^e$
$DB_b\ B_b^0, \ldots, B_b^r$
$\ldots\quad\ldots$
$DB_d\ B_d^0, \ldots, B_d^t$
$DB_f\ B_f^0, \ldots, B_f^y$
$\ldots\quad\ldots$
$DBi\ B_i^0, \ldots, B_i^k$

$B_0^{q+1}$

$B_f^{y-8}$
$B_d^{t-1}$
$B_0^{q-5}$
$B_1^{w-5}$
$B_a^{e-3}$
$B_b^{r-7}$
$B_i^{k-25}$
$B_0^{q+1}$

$B_0^{q+1}$

$Nd_1$
$DB_0\quad B_0^0, \ldots, B_0^q$
$DB_1\quad B_1^0, \ldots, B_1^w$
$\ldots\quad\ldots$
$DB_a\quad B_a^0, \ldots, B_a^e$
$DB_b\quad B_b^0, \ldots, B_b^r$
$\ldots\quad\ldots$
$DB_d\quad B_d^0, \ldots, B_d^t$
$DB_f\quad B_f^0, \ldots, B_f^y$
$\ldots\quad\ldots$
$DBi\quad B_i^0, \ldots, B_i^k$

$Nd_a$
$DB_0\quad B_0^0, \ldots, B_0^q$
$DB_1\quad B_1^0, \ldots, B_1^w$
$\ldots\quad\ldots$
$DB_a\quad B_a^0, \ldots, B_a^e$
$DB_b\quad B_b^0, \ldots, B_b^r$
$\ldots\quad\ldots$
$DB_d\quad B_d^0, \ldots, B_d^t$
$DB_f\quad B_f^0, \ldots, B_f^y$
$\ldots\quad\ldots$
$DBi\quad B_i^0, \ldots, B_i^k$

$B_0^{q+1}$

$Nd_b$
$DB_0\quad B_0^0, \ldots, B_0^q$
$DB_1\quad B_1^0, \ldots, B_1^w$
$\ldots\quad\ldots$
$DB_a\quad B_a^0, \ldots, B_a^e$
$DB_b\quad B_b^0, \ldots, B_b^r$
$\ldots\quad\ldots$
$DB_d\quad B_d^0, \ldots, B_d^t$
$DB_f\quad B_f^0, \ldots, B_f^y$
$\ldots\quad\ldots$
$DBi\quad B_i^0, \ldots, B_i^k$

$B_0^{q+1}$

$B_0^{q+1}$

$Nd_f$
$DB_0\quad B_0^0, \ldots, B_0^q$
$DB_1\quad B_1^0, \ldots, B_1^w$
$\ldots\quad\ldots$
$DB_a\quad B_a^0, \ldots, B_a^e$
$DB_b\quad B_b^0, \ldots, B_b^r$
$\ldots\quad\ldots$
$DB_d\quad B_d^0, \ldots, B_d^t$
$DB_f\quad B_f^0, \ldots, B_f^y$
$\ldots\quad\ldots$
$DBi\quad B_i^0, \ldots, B_i^k$

$B_0^{q+1}$

$Nd_d$
$DB_0\quad B_0^0, \ldots, B_0^q$
$DB_1\quad B_1^0, \ldots, B_1^w$
$\ldots\quad\ldots$
$DB_a\quad B_a^0, \ldots, B_a^e$
$DB_b\quad B_b^0, \ldots, B_b^r$
$\ldots\quad\ldots$
$DB_d\quad B_d^0, \ldots, B_d^t$
$DB_f\quad B_f^0, \ldots, B_f^y$
$\ldots\quad\ldots$
$DBi\quad B_i^0, \ldots, B_i^k$

$Nd_i$
$DB_0\quad B_0^0, \ldots, B_0^q$
$DB_1\quad B_1^0, \ldots, B_1^w$
$\ldots\quad\ldots$
$DB_a\quad B_a^0, \ldots, B_a^e$
$DB_b\quad B_b^0, \ldots, B_b^r$
$\ldots\quad\ldots$
$DB_d\quad B_d^0, \ldots, B_d^t$
$DB_f\quad B_f^0, \ldots, B_f^y$
$\ldots\quad\ldots$
$DBi\quad B_i^0, \ldots, B_i^k$

$B_0^{q+1}$

**Fig. 1**

Fig. 2

**Fig. 3**

Europäisches Patentamt

European Patent Office

Office européen des brevets

# EUROPEAN SEARCH REPORT

Application Number

EP 21 16 5152

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JACOB FLORIAN FLORIAN JACOB@KIT EDU ET AL: "Matrix Decomposition Analysis of an Access Control Approach on Transaction-based DAGs without Finality", PROCEEDINGS OF THE 25TH ACM SYMPOSIUM ON ACCESS CONTROL MODELS AND TECHNOLOGIES, ACMPUB27, NEW YORK, NY, USA, 10 June 2020 (2020-06-10), pages 81-92, XP058455873, DOI: 10.1145/3381991.3395399 ISBN: 978-1-4503-7568-9 * paragraph [02.2] * | 1-14 | INV. H04L9/32 H04L29/06 |
| A | PERVEZ HUMA ET AL: "A Comparative Analysis of DAG-Based Blockchain Architectures", 2018 12TH INTERNATIONAL CONFERENCE ON OPEN SOURCE SYSTEMS AND TECHNOLOGIES (ICOSST), IEEE, 19 December 2018 (2018-12-19), pages 27-34, XP033511914, DOI: 10.1109/ICOSST.2018.8632193 [retrieved on 2019-01-31] * paragraph [000V] * | 1-14 | |
| T | POPOV SERGUEI ET AL: "Equilibria in the tangle", COMPUTERS & INDUSTRIAL ENGINEERING, PERGAMON, AMSTERDAM, NL, vol. 136, 13 July 2019 (2019-07-13), pages 160-172, XP085858055, ISSN: 0360-8352, DOI: 10.1016/J.CIE.2019.07.025 [retrieved on 2019-07-13] * paragraph [0002] * | | |

TECHNICAL FIELDS SEARCHED (IPC)

H04L

-/--

The present search report has been drawn up for all claims

| Place of search | Date of completion of the search | Examiner |
|---|---|---|
| Munich | 9 September 2021 | Bec, Thierry |

page 1 of 3

Europäisches
Patentamt

European
Patent Office

Office européen
des brevets

**EUROPEAN SEARCH REPORT**

Application Number

EP 21 16 5152

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| T | HRGA ALEN ET AL: "Demystifying Distributed Ledger Technologies: Limits, Challenges, and Potentials in the Energy Sector", IEEE ACCESS, IEEE, USA, vol. 8, 8 July 2020 (2020-07-08), pages 126149-126163, XP011799549, DOI: 10.1109/ACCESS.2020.3007935 [retrieved on 2020-07-16] * paragraph [0011] * | | |
| A | Alexandra Tran: "An Introduction to the BlockDAG Paradigm - DAGlabs", , 23 May 2018 (2018-05-23), pages 1-7, XP055667659, Retrieved from the Internet: URL:https://blog.daglabs.com/an-introducti on-to-the-blockdag-paradigm-50027f44facb [retrieved on 2020-02-12] * page 6 * | 1-14 | |
| A | PIETRO FERRARO ET AL: "Distributed Ledger Technology, Cyber-Physical Systems, and Social Compliance", ARXIV.ORG, CORNELL UNIVERSITY LIBRARY, 201 OLIN LIBRARY CORNELL UNIVERSITY ITHACA, NY 14853, 2 July 2018 (2018-07-02), XP081553787, DOI: 10.1109/ACCESS.2018.2876766 * paragraph [0011] - paragraph [0111] * | 1-14 | |

TECHNICAL FIELDS
SEARCHED (IPC)

-/--

The present search report has been drawn up for all claims

| Place of search | Date of completion of the search | Examiner |
|---|---|---|
| Munich | 9 September 2021 | Bec, Thierry |

EPO FORM 1503 03.82 (P04C01)

Europäisches
Patentamt

European
Patent Office

Office européen
des brevets

# EUROPEAN SEARCH REPORT

Application Number

EP 21 16 5152

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | ANDREW CULLEN ET AL: "Distributed Ledger Technology for IoT: Parasite Chain Attacks", ARXIV.ORG, CORNELL UNIVERSITY LIBRARY, 201 OLIN LIBRARY CORNELL UNIVERSITY ITHACA, NY 14853, 10 November 2020 (2020-11-10), XP081807896, DOI: 10.1109/JIOT.2020.2983401 * paragraph [0OII] - paragraph [0III] * ----- | 1-14 | |
| A | US 2020/348963 A1 (BEBERMAN DAVID ALAN [US]) 5 November 2020 (2020-11-05) * paragraph [0088] - paragraph [0090] * * paragraph [0177] - paragraph [0178] * * figures 23-27 * ----- | 2 | |

TECHNICAL FIELDS
SEARCHED      (IPC)

The present search report has been drawn up for all claims

| Place of search | Date of completion of the search | Examiner |
|---|---|---|
| Munich | 9 September 2021 | Bec, Thierry |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
 
& : member of the same patent family, corresponding
    document

EPO FORM 1503 03.82 (P04C01)

**EP 4 064 609 A1**

## ANNEX TO THE EUROPEAN SEARCH REPORT
## ON EUROPEAN PATENT APPLICATION NO.

EP 21 16 5152

This annex lists the patent family members relating to the patent documents cited in the above-mentioned European search report.
The members are as contained in the European Patent Office EDP file on
The European Patent Office is in no way liable for these particulars which are merely given for the purpose of information.

09-09-2021

| Patent document cited in search report | Publication date | Patent family member(s) | Publication date |
|---|---|---|---|
| US 2020348963 A1 | 05-11-2020 | NONE | |

EPO FORM P0459

For more details about this annex : see Official Journal of the European Patent Office, No. 12/82